(19) Europäisches Patentamt
European Patent Office
Office européen des brevets

(11) EP 0 714 605 A1

(12) EUROPEAN PATENT APPLICATION

(43) Date of publication:
**05.06.1996 Bulletin 1996/23**

(51) Int Cl.[6]: **A01N 47/38**
// (A01N47/38, 43:653, 43:54)

(21) Application number: **95810740.1**

(22) Date of filing: **28.11.1995**

(84) Designated Contracting States:
**AT BE CH DE DK ES FR GB GR IE IT LI LU NL PT SE**

(30) Priority: **02.12.1994 GB 9424373**

(71) Applicants:
- **SANDOZ LTD.**
  **CH-4002 Basel (CH)**
  Designated Contracting States:
  **BE CH DK ES FR GB GR IE IT LI LU NL PT SE**
- **SANDOZ-PATENT-GMBH**
  **D-79539 Lörrach (DE)**
  Designated Contracting States:
  **DE**
- **SANDOZ ERFINDUNGEN VERWALTUNGSGESELLSCHAFT M.B.H.**
  **A-1235 Vienna (AT)**
  Designated Contracting States:
  **AT**

(72) Inventors:
- **Gisi, Ulrich**
  **CH-4493 Wenslingen (CH)**
- **Ohl, Leonie**
  **CH-4057 Basel (CH)**

(54) **Fungicidal Compositions for seed treatment**

(57) The invention discloses novel fungicidal compositions for seed treatment, comprising a mixture of cyproconazole and prochloraz. As a third component such seed treatment compositions may additionally comprise pyrimethanil.

EP 0 714 605 A1

## Description

The present invention relates to novel fungicidal compositions for the treatment of soil-and seed-borne diseases of crop plants.

It is known that certain azole derivatives have biological activity against phytopathogenic fungi. Such compounds are widely known and used in agriculture. However, crop tolerance and activity against soil and seed-borne fungi did not satisfy the needs of agricultural practice in many incidents and aspects.

It has now been found that the use of

a) cyproconazole of formula I

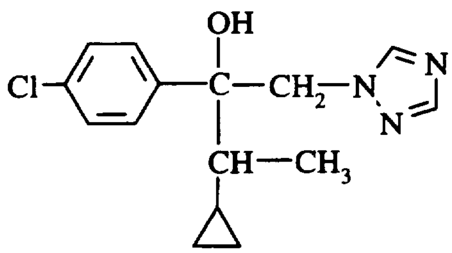

(I)

in association with

b) prochloraz of formula II

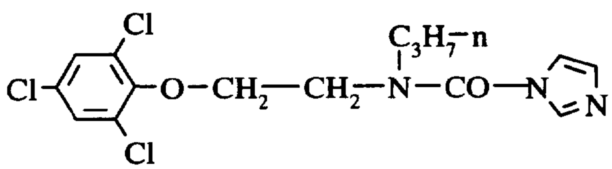

(II)

in free base forms or in agriculturally acceptable acid addition salt forms; is particularly effective in combatting or preventing soil- and seed-borne diseases of crop plants.

The combinations of compounds of formulae I and II are particularly suitable for use as seed dressing agents and in soil application, especially in seed furrow application or spotwise application around the locus of the seeds.

The combination of present invention is surprisingly effective against a wide spectrum of soil and seed-borne fungi.

Accordingly, the invention provides an improved method of combatting soil and seed-borne diseases caused by fungi. Examples of fungi that can be advantageously combatted by the method of the invention include fungi of the classes Ascomycetes, Basidiomycetes and Deuteromycetes. The combinations are particularly suitable for use against Ustilago spp, Tilletia spp, Fusarium spp (including Gerlachia spp), Pyrenophora spp (including Helminthosporium, Cochliobolus, Drechslera) and against Septoria spp (the latter diseases may also be soil-borne), and against the soil-borne fungus Pseudocercosporella herpotrichoides. Crops in which the combination may be used include cereals such as wheat, rye, barley and oats.

Cyproconazole and prochloraz are commercially available.

Cyproconazole of formula I contains two asymmetrical carbon atoms. This compound exists therefore in form of diastereomeric mixtures, or in optical pure form as isolated isomers. In this document the diastereomeric mixtures are intended, where not otherwise specified. However, in some cases pure isomeric forms may have advantages over the racemic form such as improved crop tolerance or the like, e.g. the diastereomeric forms $A^+$ and $A^-$ of cyproconazole are favoured over the diastereomeric forms $B^+$ and $B^-$.

It has been found that the use of compound II in combination with the compound of formula I surprisingly and substantially enhances the effectiveness of the latter against fungi, and vice versa. Additionally, the method of the invention is effective against a wider spectrum of such fungi that can be combatted with the active ingredients of this method when used solely. Where pure isomers of cyproconazole are employed, combinations with the $A^+$ and $A^-$ diastereomeric forms are preferred.

The method of the invention comprises applying to the locus of the fungal infection, in admixture or separately, a fungicidally effective aggregate amount of the compound of formula I and the compound of formula II.

The term locus as used herein is intended to embrace the seeds of cultivated plants or the place where the seed will be placed into the soil. The term seed is intended to embrace plant propagating material such as cuttings, seedlings, seeds, germinated or soaked seeds. Acid addition salts of compounds of general formulae I or II may be prepared from the corresponding compounds of formulae I or II by methods known per se, for example by reacting stoichiometric

quantities of the compound of formulae I or II and the appropriate acid, for example an inorganic acid, e.g. hydrochloric acid, sulfuric acid, phosphoric acid or nitric acid, or an organic acid, e.g. acetic acid, in a suitable solvent. The salts may, if necessary, be purified by recrystallization from one, two or more suitable solvents. Furthermore, specific formulations also allow compounds of formulae I or II to be used in the basic form as encapsulated compound.

It has furthermore been observed that seedlings of seeds treated with a combination according to the invention show a reduced susceptibility to soil-borne diseases, in particular against Pseudocercosporella herpotrichoides. Thus cereals of which the seeds are coated with a seed dressing formulation comprising a combination of compounds of formulae I and II may not require the first foliar treatments usually necessary for preventing or combatting cereal soil-borne diseases. Such favorable activity is in particular observed against cereal foot diseases, most particularly against Pseudocercosporella herpotrichoides.

The combinations of the invention in free base form or agriculturally acceptable acid addition salt form are also surprisingly effective against soil-borne diseases in particular soil-borne diseases of cereals, more particularly against cereal foot diseases, most particularly against Pseudocercosporella herpotrichoides when applied to the soil of the crop locus.

When applied to the soil, the compounds of formula I are applied at a rate of 50 to 400 g/ha, particularly 100 to 300 g/ha, e.g. 200 g/ha, in association with 100 to 1000 g/ha, particularly 200 to 500 g/ha, e.g. 300 g/ha, of the compound of formula II.

When applied as a seed dressing the compounds of formula I are applied at a rate of 0.01 to 100g, particularly 0.1 to 10 g, e.g. 1 g, per 100 kg of seed, in association with 1 to 100 g, particularly 5 to 50 g, e.g. 10, 20, 30 or 40 g per 100kg of seed of the compound of formula II.

The invention also provides fungicidal compositions for seed dressing comprising a compound of formula I and the compound of formula II.

In the compositions of the invention the weight ratio compound of formula I : compound of formula II lies preferably in the range of 1:10 to 1:50, more preferably of 1:10 to 1:40, for example at 1:20, 1:30 or 1:40.

Optionally the combination of this invention may be used together with another fungicidal ingredient to enhance the activity further or to widen the activity spectrum. Pyrimethanil is particularly appropriate for use in the method of this invention. The use of pyrimethanil in combination with the method of this invention improves the tolerance of the treated crop plants towards the compounds of formulae I and II.

Pyrimethanil designates 2-anilino-4,6-dimethylprimidine of formula III

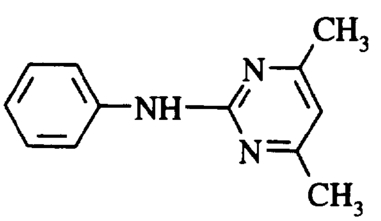

(III)

Where the compositions of the invention comprise additionally pyrimethanil, the weight ratio of the compound of formula I : pyrimethanil lies preferably in the range of 1:1 to 1:20, particularly 1:5 to 1:15.

The composition of the invention may be employed in any conventional form, for example in the form of a twin pack, an instant granulate, a flowable or a wettable powder in combination with agriculturally acceptable adjuvants. Such compositions may be produced in conventional manner, e.g. by mixing the active ingredients with appropriate adjuvants (diluents and optionally other formulating ingredients such as surfactants).

The term diluent as used herein means any liquid or solid agriculturally acceptable material including carriers - which may be added to the active constituents to bring them in an easier or improved applicable form, respectively, to a usable or desirable strength of activity. It can for example be talc, kaolin, diatomaceous earth, xylene, or water.

Particularly formulations to be applied in spraying forms such as water dispersible concentrates or wettable powders may contain surfactants such as wetting and dispersing agents, e.g. the condensation product of formaldehyde with naphthalene sulphonate, an alkylarylsulphonate, a lignin sulphonate, a fatty alkyl sulphate, and ethoxylated alkylphenol and an ethoxylated fatty alcohol.

A seed dressing formulation is applied in a manner known per se to the seeds employing the combination of the invention and a diluent in suitable seed dressing formulation form, e.g. as an aqueous suspension or in a dry powder form having good adherence to the seeds. Such seed dressing formulations are known in the art. Seed dressing formulations may contain the single active ingredients or the combination of active ingredients in encapsulated form, e.g. as slow release capsules or microcapsules.

In general, the formulations include from 0.01 to 90% by weight of active agent, from 0 to 20% agriculturally acceptable surfactant and 10 to 99.99% solid or liquid adjuvant(s), the active agent consisting of at least one compound of formula I together with a compound of formula II. Concentrate forms of compositions generally contain in between

about 2 and 80%, preferably between about 5 and 70% by weight of active agent. Application forms of formulation may for example contain from 0.01 to 20% by weight, preferably from 0.01 to 5% by weight of active agent.

The invention is illustrated by the following examples wherein parts and percentages are by weight and temperatures are in °C.

Example 1: Wettable Powder

60 parts of a mixture of cyproconazole (4.8%) and prochloraz (95.2%),
1 part sodium alkylnaphthalenesulfonate,
5 parts sodium alkylarylsulfonate-formaldehyde condensate,
5 parts highly disperse silica, and
29 parts kaolin

are ground until the particles have the desired size. A 60% wettable powder containing 2.9% of cyproconazole and 57,1% of prochloraz is obtained. The wettable powder is suitable for spray and seed coating purposes. It is applied as an aqueous suspension by an apparatus suitable for the selected purpose.

Example 2: Seed Dressing Formulation

25 parts of a combination of compounds of formulae I and II in free form or acid addition salt forms
15 parts of dialkylphenoxypoly(ethylenoxy)ethanol
15 parts of fine silica
44 parts of fine kaolin
0.5 parts of Rhodamine B as a colorant and
0.5 parts of Xanthan Gum
are mixed and ground in a contraplex mill at approx. 10'000 rpm to an average particle size of below 20 microns. The resulting formulation is applied to the seeds as an aqueous suspension in an apparatus suitable for that purpose.

Example 3: Seed Dressing Formulation

45 Parts of a combination of compounds of formulae I and II, in free form or acid addition salt form are mixed with 1.5 parts of diamyl phenoldecaglycolether ethylene oxide adduct, 2 parts of spindle oil, 51 parts of fine talcum and 0.5 parts of colorant Rhodamin B. The mixture is ground in a contraplex mill at 10'000 rpm until an average particle size of less than 20 microns is obtained. The resulting dry powder has good adherence and may be applied to seeds, e.g. by mixing for 2 to 5 minutes in a slowly turning vessel.

Example 4: Granules

0.5 Parts by weight of a binder (a non-ionic tensile) are sprayed onto 94.5 parts by weight of quartz sand in a tumbler mixer and thoroughly mixed. 5 Parts by weight of a combination of compounds of formulae I and II are then added and thorough mixing continued to obtain a granulate formulation with a particle size in the range from 0.3 to 0.7 mm.

Example 5: Field tests in wheat

Seeds of winter wheat (c.v. "Arina") are coated with a mixture of cyproconazole and compound II using an experimental seed treatment machinery (Hege 11). Rates per 100 kg seeds are 0.5 or 1 g of cyproconazole and 40 g of compound of formula II. The treated seeds are used to perform small plot field trials (randomized complete block design, four repetitions) at sites were high levels of infection with Pseudocercosporella herpotrichoides are to be expected. A high inoculum density is established by spreading infected straw on the soil surface after emergence of the plants.

After flowering, the stem bases of 25 tillers per plot are evaluated for visual symptoms of the disease. To distinguish symptoms caused by Pseudocercosporella herpotrichoides from other foot diseases, the pathogens are isolated from the stems.

The efficacy of the single compounds and the mixture is expressed as percent control of the disease [C(A), C(B), C(AB)].

The expected efficacy of a mixture, expressed as percent control [C(theor.)] can be predicted by the Abbott formula (Levi et al., 1986, EPPO-Bulletin 16, 651-657):

C(theor.) = C(A) + C(B) - [C(A) x C(B) / 100].

For calculating synergism, the ratio (SF, synergy factor) between the observed experimental efficacy of the mixture [C(AB)] and the expected efficacy of the mixture [C(theor.)] is computed. In case of synergism, the SF is higher than 1.

Results:

In the untreated plots 38% of the tillers were infected by Pseudocercosporella herpotrichoides. In the plots treated solely with cyproconazole or compound II, an efficacy of 30% and 13% respectively, was observed while in the plots planted with seeds treated with the combination of 1 g of cyproconazole and 40 g of compound II a control of 61% was observed. The above figures represent an average of values obtained from 4 trials at different sites.

Table I

| Compounds | rate g a.i. / 100 kg seeds | % Efficacy against Pseudocercosporella herpotrichoides on wheat in the field | | |
|---|---|---|---|---|
| | | observed | theor. | SF |
| Cyproconazole | 1 | 30 | | |
| Compound II | 40 | 13 | | |
| Cyproconazole + Compound II | 1 + 40 | 61 | 39 | 1.56 |

The theoretical efficacy of this combination calculated according to Abbott would however be 39%. The SF thus is 1.56. This result shows synergistic activity of the tested combination.

**Claims**

**1.** A method of combatting soil and seed-borne plant diseases which comprises applying to the plant seed or the locus thereof

a) cyproconazole of formula I

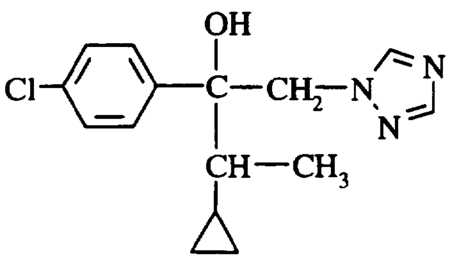

(I)

in association with

b) prochloraz of formula II

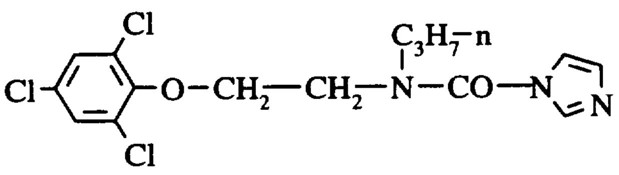

(II)

in admixture or separately in an effective aggregate amount.

**2.** A method according to claim 1, wherein the mixture ratio of cyproconazole and prochloraz is so chosen that the fungicidal activity is synergistically enhanced.

**3.** A method according to claim 1 or 2, which comprises applying to the plant seed or the locus thereof in addition to the compounds of formulae I and II the active ingredient pyrimethanil as a third component.

4. A method according to claim 3 wherein the mixture ratio of the compounds of formulae I and II and pyrimethanil is so chosen that the fungicidal activity is synergistically enhanced.

5. A composition for the treatment of soil and seed borne diseases of crop plants comprising cyproconazole and prochloraz.

6. A composition according to claim 5, which comprises cyproconazole and prochloraz in a quantity producing a synergistic fungicidal effect.

7. A composition according to claims 5 or 6, which comprises additionally pyrimethanil as a third component.

8. A composition according to claim 7 wherein the mixture ratio of the compounds I and II and pyrimethanil is so chosen that the fungicidal activity is synergistically enhanced.

European Patent Office

# EUROPEAN SEARCH REPORT

Application Number
EP 95 81 0740

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (Int.Cl.6) |
| X | GB-A-2 191 401 (SANDOZ LTD) 16 December 1987<br>* page 1, line 5 - line 23 *<br>* page 1, line 27 *<br>* page 1, line 30 - line 32 *<br>* page 1, line 34 *<br>* page 1, line 45 * | 1,2,5,6 | A01N47/38<br>//(A01N47/38, 43:653,43:54) |
| Y | | 3,4,7,8 | |
| X | CHEMICAL ABSTRACTS, vol. 115, no. 1, 8 July 1991<br>Columbus, Ohio, US;<br>abstract no. 3053,<br>N.CAVELIER ET AL. 'Sensitivity of Pseudocercosporella herpotrichiodes isolates to ergosterol biosynthesis-inhibiting fungicides'<br>* abstract *<br>& MEDED.FAC.LANDBOUWWET., RIJKSUNIV.GENT, vol. 55, no. 3a, 1990<br>pages 989-995, | 1,2,5,6 | |
| Y | | 3,4,7,8 | TECHNICAL FIELDS SEARCHED (Int.Cl.6) |
| X | CHEMICAL ABSTRACTS, vol. 114, no. 21, 27 May 1991<br>Columbus, Ohio, US;<br>abstract no. 201605,<br>R.I.HARRIS ET AL. 'Advances in the development of a prochloraz/cyproconazole mixture for broad-spectrum disease control in cereals'<br>* abstract *<br>& BRIGHTON CROP PROT. CONF.--PESTS DIS., no. 2, 1990<br>pages 813-818, | 1,2,5,6 | A01N |
| Y | | 3,4,7,8 | |
| | -/-- | | |

The present search report has been drawn up for all claims

| Place of search | Date of completion of the search | Examiner |
|---|---|---|
| THE HAGUE | 19 March 1996 | Lamers, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent Office

# EUROPEAN SEARCH REPORT

Application Number
EP 95 81 0740

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| Y | GB-A-2 267 644 (SCHERING AG) 15 December 1993<br>* page 1, line 17 - line 24 *<br>* page 2, line 19 *<br>* page 2, line 23 *<br>* page 5, line 5 - line 8 *<br>* page 5, line 25 - line 27 *<br>* page 7, line 33 - page 8, line 12 *<br>* page 10 *<br>* page 17 *<br>--- | 3,4,7,8 | |
| Y | GB-A-2 258 615 (SCHERING AG) 17 February 1993<br>* page 2, line 1 - line 5 *<br>* page 2, line 22 - line 24 *<br>* page 3, line 9 - line 13 *<br>* page 11; example 11 *<br>--- | 3,4,7,8 | |
| Y | EP-A-0 556 157 (CIBA GEIGY AG) 18 August 1993<br>* page 2, line 1 - line 4 *<br>* page 2, line 15 - line 16 *<br>* page 2, line 25 - line 36 *<br>* page 3, line 16 - line 19 *<br>* page 3, line 31 - line 36 *<br>* page 3, line 41 *<br>* page 3, line 47 *<br>---<br>-/-- | 3,4,7,8 | TECHNICAL FIELDS SEARCHED (Int.Cl.6) |

The present search report has been drawn up for all claims

| Place of search | Date of completion of the search | Examiner |
|---|---|---|
| THE HAGUE | 19 March 1996 | Lamers, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent Office

# EUROPEAN SEARCH REPORT

Application Number
EP 95 81 0740

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | CHEMICAL ABSTRACTS, vol. 110, no. 23, 5 June 1989 Columbus, Ohio, US; abstract no. 207691, M.N.BUSH ET AL. 'Control of stem base and foliar disease of winter cereals with prochloraz plus cyproconazole' * abstract * & BRIGHTON CROP PROT. CONF.--PESTS DIS., no. 3, 1988 pages 935-940, --- | 1,2,5,6 | |
| A | EP-A-0 300 777 (SCHERING AGROCHEMICALS LTD) 25 January 1989 * page 2, line 4 - line 10 * * page 2, line 15 * * page 2, line 18 * ----- | 1-8 | |
| | | | TECHNICAL FIELDS SEARCHED (Int.Cl.6) |

The present search report has been drawn up for all claims

| Place of search | Date of completion of the search | Examiner |
|---|---|---|
| THE HAGUE | 19 March 1996 | Lamers, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)